# FASCICULE DE BREVET EUROPEEN

(11) **EP 1 170 599 B1**
(45) Date de publication et mention de la délivrance du brevet: **03.03.2004**
(21) Numéro de dépôt: 01401770.1
(22) Date de dépôt: 03.07.2001
(51) Int. Cl.: G01S 7/03, H01Q 3/26, H01Q 23/00, H01Q 3/36, F41G 3/00

(54) **Perfectionnements aux systèmes d'observation et visée**
Verbesserungen an Beobachtungs- und Visiersystemen
Improvements to observation and aiming systems

(30) Priorité: 03.07.2000 FR 0008606
(43) Date de publication de la demande: 09.01.2002
(73) Titulaire: SAGEM S.A., 75116 Paris (FR)
(72) Inventeur: Audren, Jean Thierry, 78470 Saint Rémy les Chevreuse (FR); Dinnichert, Michel, 78140 Vélizy (FR); Fritz, Joel, 84360 Mérindol (FR); Lonnoy, Jacques, 75013 Paris (FR); Lemorton, Joel, 31280 Aigrefeuille (FR); Roy, JC, 91190 Gif sur Yvette (FR)
(74) Mandataire: Callon de Lamarck, Jean-Robert

(56) Documents cités:
- EP-A- 0 545 742
- EP-A- 0 987 560
- FR-A- 2 751 761
- US-A- 5 471 220
- US-A- 5 583 511
- LACOMME P ET AL: "AMSAR: A EUROPEAN ACTIVE ANTENNA RADAR PROGRAMME" PROCEEDINGS OF THE 1996 NATIONAL RADAR CONFERENCE,US,NEW YORK, IEEE, 13 mai 1996 (1996-05-13), pages 82-87, XP000634922 ISBN: 0-7803-3147-8
- KOLE R F ET AL: "COBRA - LESSONS LEARNED" IEEE MTT-S INTERNATIONAL MICROWAVE SYMPOSIUM DIGEST,US,NEW YORK, IEEE, 23 mai 1994 (1994-05-23), pages 1423-1426, XP000512766 ISBN: 0-7803-1779-3

## Description

La présente invention est relative aux systèmes d'observation et de visée.

Elle trouve en particulier avantageusement application dans le cas de systèmes d'observation panoramiques opto-électroniques montés sur des véhicules et notamment sur des hélicoptères de combat.

On connaît déjà de nombreux appareils et viseurs gyro-stabilisés pour hélicoptères et pour véhicules blindés.

Classiquement, un tel système comporte un bloc optique pour l'observation et la visée dans le domaine des rayonnements visibles, ainsi que différents senseurs tels qu'une caméra infrarouge, une caméra de télévision et un laser, notamment pour la vision de nuit, l'écartométrie, la télémétrie et/ou la désignation de cibles.

La ligne de visée de ces différents moyens est montée pivotante en site et en gisement par rapport à la structure de l'engin.

Les systèmes d'observation et de visée connus à ce jour sont particulièrement bien adaptés à l'observation, la reconnaissance et l'identification, ainsi qu'au tir et de façon générale à la plupart des missions militaires.

Un des problèmes rencontrés avec les systèmes d'observation et de visée connus à ce jour tient en ce que l'utilisateur doit réaliser en permanence un balayage mécanique de l'environnement dans lequel il se trouve.

Ce balayage permanent est une opération répétitive, qui peut induire des pertes d'attention chez l'utilisateur.

Une première solution pour pallier cet inconvénient est de mettre en oeuvre sur les images relevées par la caméra infrarouge un traitement de détection automatique, et de compléter le système d'observation et de visée par des moyens de poursuite automatique.

Mais, cette solution n'est pas en elle-même totalement satisfaisante dans la mesure où la caméra thermique infrarouge est susceptible de détecter tous les points chauds dans l'environnement balayé par l'utilisateur et de générer en conséquence de nombreuses fausses alarmes entraînant pour l'utilisateur une perte de vigilance, ainsi qu'une perte de confiance dans le système.

C'est pourquoi Il a récemment été proposé notamment dans la demande de brevet FR 2 751 761 un système d'observation et de visée intégrant à proximité immédiate des moyens optiques et des senseurs précités une unité de détection radar millimétrique.

Cette unité de détection radar a l'avantage de permettre de corréler les détections réalisées par la caméra infrarouge et de pallier l'affectation de la portée et du contraste des moyens de détection infrarouge par l'humidité et les mauvaises conditions météorologiques.

Toutefois, cette solution n'est pas non plus pleinement satisfaisante. Elle empêche en effet de réaliser un balayage radar lorsque la caméra infrarouge est immobilisée sur une cible potentielle.

La première idée qui vient à l'esprit pour tenter de pallier cet inconvénient est de dédoubler les mécanismes d'orientation angulaire de façon à permettre un balayage radar indépendant du balayage infrarouge.

Mais, pour des raisons de coûts, d'encombrement, de poids, de complexité, etc. cette solution est difficilement envisageable.

Un système d'observation et de visée selon le préambule de la revendication 1 est connu du document US 5 583 511 et du document EP 0 987 560.

L'invention propose quant à elle une solution qui permet un balayage radar indépendant du balayage infrarouge, tout en étant d'un encombrement, d'un poids et d'un coût qui permettent de l'intégrer facilement dans des systèmes d'observation et de visée.

La solution selon l'invention est donnée par la revendication 1.

On notera que les amplificateurs à MMIC (« Monolithic Microwave Integrated Circuits » ou circuits intégrés micro-ondes monolithiques) sont utilisés depuis longtemps pour leur fonction d'amplification dans d'autres domaines que celui des systèmes d'observation et de visée (télécommunications notamment).

Toutefois, à la connaissance des inventeurs, les amplificateurs à MMIC n'ont jamais été utilisés pour réaliser des antennes actives, celles-ci utilisant généralement, notamment dans le cas de radars à impulsions, une source de puissance unique (Tube à Ondes Progressives) dont la sortie est divisée pour être distribuée sur les différentes antennes élémentaires qui compose l'antenne active.

Il n'est pas concevable, pour des raisons de dimensionnement, d'utiliser un amplificateur à MMIC pour réaliser cette source de puissance unique, en particulier dans le cas des radars à impulsions qui nécessitent des puissances importantes.

Et on notera au surplus que les antennes actives connues à ce jour sont généralement des antennes aptes à réaliser un balayage autour de deux axes : l'utilisation d'amplificateurs à MMIC sur les différentes voies distribuant les différentes antennes élémentaires de ce type d'antennes conduirait à des solutions particulièrement complexes quant à l'encombrement des MMIC.

La solution proposée ici permet quant à elle de s'affranchir de cette complexité en utilisant un balayage autour d'un seul axe, lequel est particulièrement adapté dans le cas de véhicules au sol ou d'hélicoptères ou aéronefs ayant une mission de surveillance à proximité du sol.

Un tel système est en outre avantageusement complété par les différentes caractéristiques suivantes :
- ces moyens de déphasage sont du type à ferrite ;
- les moyens de détection et/ou d'observation radar sont du type à ondes millimétriques.

L'invention concerne également avantageusement un système d'observation ou de visée pour véhicule comportant un bloc optique pour une voie d'observation et/ou de détection dans le domaine du visible et des senseurs pour la vision de nuit et/ou l'écartométrie et/ou la télémétrie et/ou la désignation de cibles, ce bloc optique et ces senseurs étant montés pivotant autour d'au moins un axe par rapport au véhicule, caractérisé en ce qu'il comporte également un système du type précité.

Les moyens de détection et/ou d'observation radar sont alors avantageusement disposés à proximité immédiate du bloc optique et des senseurs.

D'autres caractéristiques et avantages de l'invention ressortiront encore de la description qui suit, laquelle est purement illustrative et non limitative et doit être lue en regard des dessins annexés sur lesquels :
- les figures 1a et 1b sont des représentations schématiques en vue de côté et en vue de dessus illustrant la surveillance mise en oeuvre par un système d'observation et de visée conforme à un mode de réalisation de l'invention ;
- la figure 2 illustre schématiquement l'intégration d'un système à MMIC conforme à un mode de réalisation possible de l'invention ;
- la figure 3 illustre schématiquement un détail d'alimentation d'une antenne du système de la figure 2 ;
- la figure 4 illustre schématiquement la structure de module MMIC conforme à un mode de réalisation possible de l'invention.

Un système d'observation et de visée conforme à un mode de réalisation possible de l'invention comporte, de façon connue en soi, une caméra infrarouge, une caméra de télévision et un laser intégrés, avec un bloc optique, dans une tête de visée.

Cette tête de visée intègre également une unité de détection radar.

La structure générale de la tête de visée et la répartition des différents éléments intégrés dans celle-ci sont similaires à ce qui a pu être décrit dans la demande de brevet FR 2 751 761.

L'unité de détection radar comporte d'une part une antenne active constituée d'une pluralité d'antennes élémentaires juxtaposées et d'autre part une électronique qui commande l'alimentation de ces différentes antennes élémentaires de façon que le lobe principal d'émission/réception de l'antenne active réalise un balayage angulaire de part et d'autre de la direction de visée.

Le balayage réalisé par cette unité de détection radar a la particularité d'être un balayage angulaire autour d'un seul axe, l'unité de détection radar ne réalisant un balayage en gisement, mais pas de balayage en site.

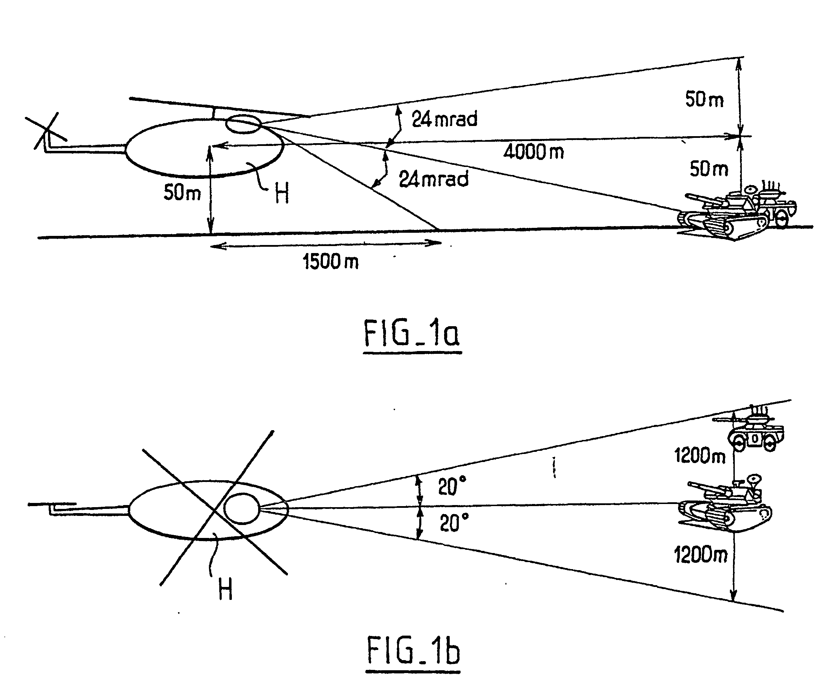

Comme on le comprend aisément en se référant aux figures 1a et 1b, un tel balayage électronique en gisement seul est particulièrement adapté à la surveillance de cibles éloignées par un hélicoptère H, ou de façon générale tout autre véhicule, situé à basse altitude ou au niveau du sol.

Dans l'exemple illustré sur les figures 1a et 1b, l'hélicoptère est situé à une altitude de l'ordre de 50 m. Le radar à antenne active a une ouverture angulaire en site de ± 24 mrad de part et d'autre de la direction de visée. Il réalise un balayage en gisement de ladite direction de visée.

Ceci lui permet de repérer des cibles avec une portée allant jusqu'à 4 km ou supérieure.

Pour des portées de 4 km, ceci correspond à une zone balayée d'une largeur de 2, 4 km.

La fréquence du balayage en gisement est par exemple de 0, 25 Hz.

On notera que la réalisation d'un balayage électronique en gisement seul a l'avantage de permettre une structure particulièrement simple pour l'antenne active et l'électronique de balayage à laquelle elle est associée.

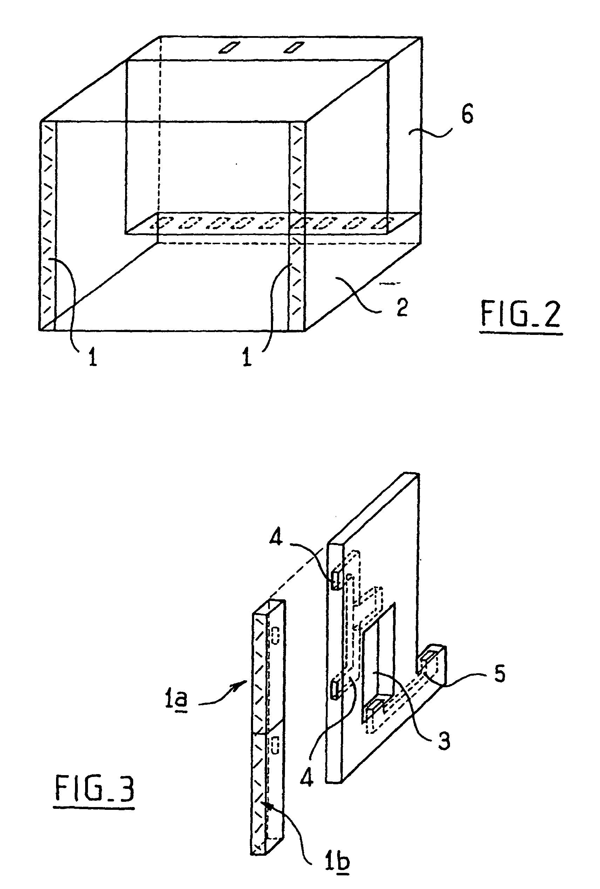

Un exemple de structure possible va maintenant être décrite en référence aux figures 2 à 4.

L'antenne à balayage électronique représentée sur la figure 2 comporte une pluralité d'antennes élémentaires 1, qui sont réparties dans un même plan et sont parallèles les unes aux autres.

Le plan dans lequel ces antennes élémentaires 1 sont disposées est un plan perpendiculaire à la direction de visée du radar.

Ces antennes élémentaires sont des antennes à fente (rayonnement sur le petit côté), constituée chacune de deux demi-guides résonnants 1a, 1b.

Ces demi guides résonnants 1a, 1b sont alimentés par l'intermédiaire d'un module de commande 2 constitué d'une pluralité d'éléments d'alimentation 3 du type de celles représentées sur la figure 3.

Plus particulièrement, les éléments d'alimentation 3 sont des structures métalliques planes disposées de façon parallèle les unes aux autres, chaque antenne élémentaire 1 étant associée à une structure 3 et s'étendant dans la hauteur de la tranche de celle-ci.

On notera que l'épaisseur des antennes élémentaires 1 et des structures 3 est choisie pour obtenir un minimum de lobes secondaires dans le diagramme de rayonnement en gisement.

De même, la disposition des fentes est choisie de manière à minimiser les lobes secondaires en site.

Ainsi que l'illustre la figure 3, chacune de ces structures d'alimentation 3 présente un logement 3a pour recevoir un module d'amplification et de déphasage. Elle intègre des guides d'ondes 4, 5 permettant de relier ledit module d'une part aux deux demi-guides d'ondes résonants 1a, 1b associés à la structure (guides d'ondes 4) et d'autre part à des moyens d'alimentation/distribution en amont de ladite structure (moyens référencés par 6 sur la figure 2) (guide d'ondes 5).

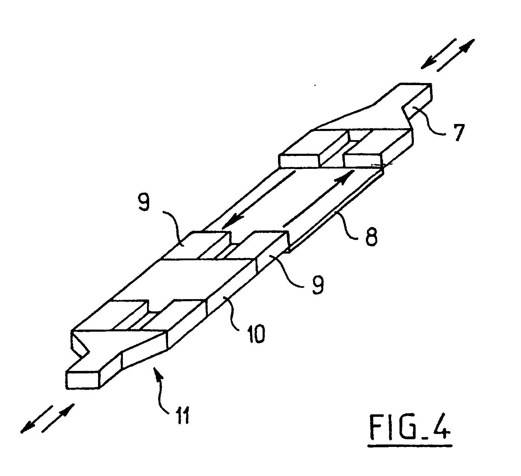

Un module d'amplification et de déphasage est représenté sur la figure 4.

Il comporte les différentes parties suivantes disposées successivement de son entrée d'alimentation à sa sortie vers les demi-guides d'ondes résonnants :
- un circulateur 7 à deux branches, l'une pour les ondes montantes, l'autre pour les branches descendantes ;
- un module d'amplification 8,
- deux guides d'ondes 9 de transition, l'un pour les ondes montantes, l'autre pour les ondes descendantes,
- un déphaseur 10 à ferrite,
- un circulateur 11 relié à l'amplificateur MMIC, un circulateur de transition, des moyens de déphasage en ferrite, ainsi qu'un circulateur reliant ces moyens de déphasage à un guide d'ondes lui-même relié aux deux antennes.

Le module d'amplification 8 est avantageusement un module à circuit intégré micro-ondes monolithique ou MMIC (« Monolithic microwave integrated circuits ») selon la terminologie généralement utilisée par l'homme du métier.

Ce module est utilisé comme amplificateur dans le sens montant et comme pré-amplificateur faible bruit dans le sens descendant.

Les signaux émis sont par exemple des signaux à impulsions.

Des moyens de traitement déportés sont prévus pour traiter les signaux d'échos reçus.

Comme on l'aura compris, un des avantages de la structure qui vient d'être décrite est celui de son faible encombrement.

On notera en particulier que le fait que la balayage réalisé par le radar soit un balayage autour d'un seul axe permet d'intégrer, dans chacune des voies reliant la source d'alimentation aux antennes élémentaires, des amplificateurs à MMIC se présentant sous forme d'éléments plats, disposés de façon parallèle les uns aux autres (ces éléments plats formant amplificateurs MMIC étant en l'occurrence répartis dans les structures d'alimentation 3 disposées dans le module de commande 2 qui est de très faibles dimensions).

A titre d'exemple, le module de commande 2 et les antennes 1 ont un encombrement total de 200 x 200 x 50 mm³ et un poids inférieur à 2 Kg, ce qui permet une intégration facile de l'ensemble radar dans une tête de visée.

## Revendications

1. Système d'observation et de visée apte à être monté sur un véhicule (H), comportant des moyens de détection et/ou d'observation radar comportant une antenne active constituée d'une pluralité d'antennes élémentaires (1) et des moyens (2) qui commandent électroniquement l'alimentation des différentes antennes élémentaires (1) de ladite antenne active pour réaliser un balayage angulaire en gisement de la direction d'émission/réception de ladite antenne autour de la direction de visée, **caractérisé en ce que** les moyens de commande d'alimentation comportent des amplificateurs (8) à MMIC répartis sur les différentes voies d'alimentation des antennes élémentaires (1) de l'antenne active et des moyens de déphasage (10) commandés, disposés sur le trajet des ondes émises, en aval des amplificateurs (8) à MMIC.

2. Système selon la revendication 1, **caractérisé en ce que** ces moyens de déphasage (10) sont du type à ferrite.

3. Système selon l'une des revendications 1 à 2, **caractérisé en ce que** les moyens (2) de commande sont répartis sur des structures d'alimentation (3) de forme générales plates et disposées de façon parallèle les unes aux autres dans un module de commande.

4. Système selon la revendication 3, **caractérisé en ce que** les antennes élémentaires (1) de l'antenne active s'étendent le long des tranches desdites structures.

5. Système selon l'une des revendications précédentes, **caractérisé en ce que** les moyens de détection et/ou d'observation radar sont du type à ondes millimétriques

6. Système d'observation ou de visée pour véhicule comportant un bloc optique pour une voie d'observation et/ou de détection dans le domaine du visible et des senseurs pour la vision de nuit et/ou l'écartométrie et/ou la télémétrie et/ou la désignation de ciblés, ce bloc optique et ces senseurs étant montés pivotant autour d'au moins un axe par rapport au véhicule, **caractérisé en ce qu'**il comporte également un système selon l'une des revendication précédentes.

7. Système selon la revendication 6, **caractérisé en ce que** les moyens de détection et/ou d'observation radar sont disposés à proximité immédiate du bloc optique et des senseurs.

## Patentansprüche

1. Beobachtungs- und Visiersystem, das geeignet ist, auf einem Fahrzeug (H) montiert zu werden, das Radarerfassungsund/oder -beobachtungsmittel umfaßt, die eine Aktivantenne umfassen, die aus mehreren Elementarantennen (1) und Mitteln (2) gebildet sind, die die Versorgung der verschiedenen Elementarantennen (1) der Aktivantenne zum Durchführen einer horizontalen Winkelabtastung der Sende/Empfangsrichtung der Antenne um die anvisierte Richtung elektronisch steuern, **dadurch gekennzeichnet, daß** die Mittel zum Steuern der Versorgung MMIC-Verstärker (8) umfassen, die auf die verschiedenen Versorgungswege der Elementarantennen (1) der Aktivantenne verteilt sind, und gesteuerte Phasenverschiebungsmittel (10), die entlang des Weges der ausgesendeten Wellen angeordnet sind, stromauf der MMIC-Verstärker (8).

2. System nach Anspruch 1, **dadurch gekennzeichnet, daß** die Phasenverschiebungsmittel (10) vom Ferrit-Typ sind.

3. System nach Anspruch 1 oder 2, **dadurch gekennzeichnet, daß** die Steuermittel (2) auf Versorgungsstrukturen (3) von im allgemeinen flacher Form verteilt sind und parallel zueinander in einem Steuermodul angeordnet sind.

4. System nach Anspruch 3, **dadurch gekennzeichnet, daß** die Elementarantennen (1) der Aktivantenne sich entlang von Abschnitten dieser Strukturen erstrecken.

5. System nach einem der vorhergehenden Ansprüche, **dadurch gekennzeichnet, daß** die Radarerfassungs- und/oder -beobachtungsmittel vom Millimeterwellentyp sind.

6. Beobachtungs- oder Visiersystem für ein Kraftfahrzeug, das einen optischen Block für einen Beobachtungsund/oder Detektionsweg im sichtbaren Bereich und Sensoren für die Nachtsicht und/oder Spurmessung und/oder Entfernungsmessung und/oder Zielerfassung bzw. -bezeichnung umfaßt, wobei dieser optische Block und diese Sensoren schwenkbar um wenigstens eine Achse bezüglich des Fahrzeuges befestigt sind, **dadurch gekennzeichnet, daß** es auch ein System nach einem der vorhergehenden Ansprüche umfaßt.

7. System nach Anspruch 6, **dadurch gekennzeichnet, daß** die Radarerfassungs- und/oder -beobachtungsmittel in der unmittelbaren Nähe des optischen Blockes und der Sensoren angeordnet sind.

## Claims

1. Observation and sighting system capable of being mounted on a vehicle (H), including radar detection and/or observation means having an active antenna consisting of a plurality of elementary antennas (1) and means (2) which electronically control the supply of the various elementary antennas (1) of the said active antenna, in order to carry out an angular bearing scan of the emission/reception direction of the said active antenna around the sighting direction, **characterized in that** the supply-control means include MMIC amplifiers (8), distributed over the various supply channels of the elementary antennas (1) of the active antenna, and controlled phase-shifting means (10) arranged on the path of the emitted waves, downstream of the MMIC amplifiers (8).

2. System according to Claim 1, **characterized in that** the phase-shifting means (10) are of the ferrite type.

3. System according to one of Claims 1 and 2, **characterized in that** the control means (2) are distributed over supply structures (3), which are of flat general shape and are arranged parallel to one another in a control module.

4. System according to Claim 3, **characterized in that** the elementary antennas (1) of the active antenna extend along side-edges of the said structures.

5. System according to any one of the preceding claims, **characterized in that** the radar detection and/or observation means are of the millimetre-wave type.

6. Observation or sighting system for a vehicle, having an optics unit for an observation and/or detection channel in the visible range and sensors for night vision and/or ranging and/or telemetry and/or target designation, this optics unit and these sensors being mounted so that they can be pivoted about at least one axis with respect to the vehicle, **characterized in that** it also includes a system according to any one of the preceding claims.

7. System according to Claim 6, **characterized in that** the radar detection and/or observation means are arranged in immediate proximity to the optics unit and the sensors.
